# EUROPEAN PATENT SPECIFICATION

(11) **EP 4 189 015 B1**
(45) Date of publication and mention of the grant of the patent: **08.07.2026**
(21) Application number: 21827419.9
(22) Date of filing: 24.11.2021
(51) Int. Cl.: C09D 133/14, C09D 5/02, C09D 7/20, E01F 9/518, C09D 133/06, C08G 59/18, C09D 5/33

(54) **FAST CURE AQUEOUS PAINT COMPOSITION**
SCHNELLHÄRTENDE WÄSSRIGE LACKZUSAMMENSETZUNG
COMPOSITION DE PEINTURE AQUEUSE À SÉCHAGE RAPIDE

(30) Priority: 27.11.2020 IT 202000028805
(43) Date of publication of application: 07.06.2023
(73) Proprietor: Team Segnal S.r.l., 26867 Somaglia (LO) (IT)
(72) Inventor: BIGNAMI, Claudio Giuseppe, 26841 Casalpusterlengo (LO) (IT)
(74) Representative: Dragotti & Associati S.P.A.
(86) International application number: PCT/IB2021/060906
(87) International publication number: WO 2022/112958

(56) References cited:
- EP-A1- 2 333 022
- KR-A- 20160 129 749
- US-A1- 2011 136 936
- US-A1- 2015 368 466
- US-A1- 2016 208 129
- US-A1- 2018 162 997

## Description

The present invention relates to an aqueous paint composition comprising an acrylic polymer emulsion anionically stabilized at basic pH with a volatile base and containing self-crosslinking functionalities, an epoxy-polyamine adduct, and a high boiling glycol-ether.

The film obtained by the aqueous paint composition according to the present invention as well as the use thereof in horizontal road marking are also described.

### State of the Art

Horizontal road marking was born in the early 1900s and plays various roles: from optical orientation tool to regulator of traffic flow; from informing drivers about oncoming dangers to driving restrictions.

Consequently, horizontal road marking plays a primary role in road safety, by reducing the number of deaths and injuries.

Road marking efficiency and durability are therefore required by both road users and road authorities. From the users' point of view, the contrast of color and luminance with the road surface are properties that should be maximized (Horberry et al., Transportation Research Part F Traffic Psychology and Behaviour 2006, 9(1):77-87). The selection of the type of materials for road marking by road administrators depends instead on many factors, including desired duration, required visibility, price and local regulations.

All systems used for this type of application consist of a pigmented coating containing partially incorporated retro-reflective elements such as glass beads.

In addition to durability and functionality of road markings, ease of application and the effect on human health and environment are primary considerations for their selection. Horizontal road marking painting systems can be divided into: bicomponent materials of epoxy, polyurethane or unsaturated acrylic nature, which cure due to the chemical reaction that occurs at the site of application, thermoplastic powders based on hydrocarbon or alkyd resins that require heat for application on the road, paints that dry upon evaporation of the dissolving solvent medium and water-based paints that harden on the application site due to the loss of neutralizing agent (e.g. ammonia).

Thermoplastic materials are essentially solvent-free and, although some of the resins required for their production are from renewable natural resources, the need for double heating (production-application) significantly increases their environmental impact.

Certain two-component systems also need heating and have toxicity issues related to the use of epoxy resin, isocyanates, or acrylic monomers as well as hazard issues due to the use of organic peroxides as reaction catalysts *in situ.*

In the case of solvent-based paints (solventborne), these are traditionally products that include organic binders of various nature: alkyd binders, alkyd binders in combination with chlorinated rubbers or acrylic binders, soluble in organic solvent. The solvent phase of this system results in a significant release of VOCs (volatile organic compounds) into the atmosphere.

The environmental impact of these exhalations is considerably worsened due to the photochemical decomposition that these substances undergo in the atmosphere.

During their decomposition in the atmosphere, VOCs interact with nitrogen oxides (NOx), significantly increasing ozone formation. Ground-level ozone is an important lung irritant, recognized worldwide as one of the key pollutants responsible for smog.

Stability over time of solventborne paint products for road marking is on average poor, they can in fact show sedimentation and viscosity increase issues. The application of the solvent-based product generates a coating that does not exceed 400 µm. In fact, thicker films tend to form a surface skin that slows down the coating evaporation, thus requiring much longer time to dry, even in favorable conditions.

The application of solventborne paints may be carried out at room temperatures from 5 to 40°C and with a surface temperature below 50°C. Drying of such paints is strongly influenced by air, surface temperature, building of applied films, and by the mixture of solvents used.

Conversely, water-based paints have a significantly reduced impact on human health and the environment compared to other materials.

Attention to the environment has therefore pushed paint manufacturers to prefer water-based (waterborne) products.

The first waterborne paint products were marketed in the USA in the early 1980s.

These products were quite similar to solvent-based coatings. Their setting was only linked to the solvent phase (water) loss which automatically led to drying (lacquer paints). However, they suffered from a very long drying time and a parallel development of resistance to washout, severely affected by the weather conditions.

In the 1990s, the so-called "quick-set" technology was introduced, which introduces ammonia into the polymer forming the binder portion of these waterborne paint products. The polymer irreversibly solidifies when the pH drops, which occurs due to ammonia evaporation.

However, also traditional waterborne systems have the drawback of not being able to be applied in prohibitive atmospheric conditions, such as very high humidity and temperatures below 10°C.

It is therefore apparent the need to provide new water-based products being less sensitive to temperature and able to withstand adverse environmental conditions, such as snow and heavy rain, which retain the characteristics of resistance to wear, excellent visibility and slip resistance obtainable using traditional solvent-based or thermoplastic products, but at the same time have a low environmental impact.

A coating formulation for use in a traffic paint application with quick setting property is disclosed in US2018162997A1. The formulation comprises a latex product composition comprising an anionically-stabilized latex, a volatile, and an adduct formed by reacting one or more amine compound with one or more epoxy compounds. Also US2011136936A1 relates to a fast dry binder suitable for use as traffic paint and discloses a composition comprising an anionically stabilized emulsion polymer, a polyamine and a volatile base.

### Summary of the Invention

In relation to paint products for horizontal road marking, the inventors have observed that the obvious ecological dictates and legislation pose difficult formulation problems for paint manufacturers in order to reduce VOCs emissions when drying solvent-based products or to avoid heating of the thermoplastic products which, among other things, lead to undesirable increases in costs.

An object of the present invention is to provide new waterborne paint products which allow a film formation on the road surface which is particularly resistant to foot traffic, and having mechanical resistance performance above the standard.

A further object of the present invention is to provide new paint products which maintain or improve the performance of traditional solvent-based or thermoplastic products while having, at the same time, a low environmental impact.

The inventors have surprisingly found that the combination of substances present in the aqueous composition according to the invention accelerates the first coagulation phase and at the same time catalyzes the crosslinking process, without compromising the coalescence phase.

The main objects described above are achieved with an aqueous paint composition according to claim 1, with use thereof in horizontal road marking according to claim 12, with a coating film according to claim 13, and with a method for reducing the curing time according to claim 14.

### Description of the Figures

**Figure 1****.** Clear acrylic paint (E25) without added nitrogen polymer (PA) (Reference);
**Figure 2****.** Clear acrylic paint (E25) with added nitrogen polymer (PA46), but without added high boiling glycol-ether (Reference);
**Figure 3****.** Clear acrylic paint (E25) with added nitrogen polymer (PA46) and with added high boiling glycol-ether (DPnB) (Invention);
**Figure 4****.** Brookfield viscosity cPs (mPa.s) of formulations being compared (E25/PA46 combination ratios. Overlapping results also obtained with: E25/PA40, E30/PA30, E30/PA40, E30/PA46, E34/PA30, E34/PA35, E35/PA30, or E35/PA35);
**Figure 5****.** Reactivity 1/minutes x100 of formulations being compared (E25/PA46 combination ratios. Overlapping results obtained also with: E25/PA40, E30/PA30, E30/PA40, E30/PA46, E34/PA30, E34/PA35, E35/PA30, or E35/PA35);
**Figure 6****.** Stability, days at 25°C (1/viscosity) of formulations being compared (E25/PA46 combination ratios);
**Figure 7****.** Abrasion Resistance (ASTM D4060 Standard Test) of the coating made with the 90/10 combination (left and right) compared to the coating originating from the standard without additives (center).
**Figure 8****.** Enlarged detail of the image shown in Figure 7.
**Figure 9****.** Application of the paint product according to the invention on road and overrun by tires 8' after application of the E25/PA46 (90/10) product.
**Figure 10****.** FT-IR spectrum (transmittance) showing the absorption bands of the substituted aromatic ring in position 1,4 (para). The arrow indicates the specific and characteristic absorption at about 829 cm⁻¹.
**Figure 11****.** FT-IR spectrum (absorbance) of Bisphenol A.
**Figure 12****.** FT-IR spectrum (absorbance) of bisphenol A diglycidyl ether A (Epon^{®} 828).
**Figure 13****.** FT-IR spectrum (absorbance) of the epoxy-polyamine adduct PA30.
**Figure 14****.** FT-IR spectrum (absorbance) of the epoxy-polyamine adduct PA35.
**Figure 15****.** FT-IR spectrum (absorbance) of the epoxy-polyamine adduct PA40.
**Figure 16****.** FT-IR spectrum (absorbance) of the epoxy-polyamine adduct PA46.

### Definitions

Unless otherwise defined, all terms of the art, notations, and other scientific terms used herein are intended to have the meanings commonly understood by those skilled in the art to which this description belongs. In some cases, terms with meanings that are commonly understood are defined herein for clarity and/or ready reference; therefore, the inclusion of such definitions in the present description should not be construed as being representative of a substantial difference with respect to what is generally understood in the art.

The terms **"approximately"** and **"about"** used in the text refer to the range of the experimental error that is inherent in the execution of an experimental measurement.

The terms **"comprising", "having", "including"** and **"containing"** are to be intended as open-ended terms *(i.e.,* meaning "comprising, but not limited to"), and are to be considered as a support also for terms such as "consist essentially of", "consisting essentially of", "consist of", or "consisting of".

The terms **"consists essentially of", "consisting essentially of"** are to be intended as semi-closed terms, meaning that no other ingredients affecting the novel features of the invention are included (optional excipients may therefore be included).

The terms **"consists of", "consisting of"** are to be intended as closed terms.

The term "acrylic polymer" is intended to indicate a pure or a styrene-modified acrylic polymer.

The term "anionically stabilized" is intended to indicate a polymer carrying a functional group in the chain which expresses an anionic charge (e.g.: R-COO⁻) neutralized with a countercathion (e.g.: NH₄⁺). Once neutralized, the anionic functional group confers to the system sufficient polarity, necessary to stabilize the suspension of the polymeric colloidal particles. The release of the countercathion (volatile base) results in destabilization of the colloidal suspension and subsequent coagulation, consequently triggering the particle coalescence process.

The term "volatile base" is intended to indicate a base which should be volatile enough to be released under air-drying conditions.

The term "epoxy-polyamine adduct" is intended to indicate a polymer containing at least the following four blocks:
- a difunctional epoxy block which determines the linear backbone of the final compound, typical examples are diglycidyl ethers of Bisphenol A and F, such as the resins: Ankarez^{®}, Araldite^{®}, Bekopox^{®}, Epikote^{®}, Epilox^{®}, Eponac^{®}, Eposir^{®}, Epotec^{®}, Epon^{®};
- an alkyl-amine having a linear or branched C₁-Cₑ aliphatic chain which introduces the hydrophobic character;
- a polyetheramine (based on oxypropylene (PO), oxyethylene (EO), or a combination thereof) which introduces the hydrophilic character, typical examples are Jeffamine^{®} polyetheramines;
- a chain terminator which can be an amino or amide-amino chain terminator

The term "C₁-C₆ alkyl", in the present context, refers to a branched or linear hydrocarbon containing 1 to 6 carbon atoms. Examples of C₁-C₆ alkyl groups include, but are not limited to, methyl, ethyl, n-propyl, isopropyl, n-butyl, sec-butyl, isobutyl, tert-butyl, n-pentyl, n-hexyl.

The term "high boiling glycol-ether" is intended to indicate a compound having a boiling point comprised between 225 and 250°C.

The term "self-crosslinking functionalities" is intended to indicate the reactive functionalities of a polymer necessary for its curing/crosslinking process (polymerization/polycondensation), without the need for further reagent additions.

The term "Minimum Film Forming Temperature" (MFFT) is to be intended as the minimum film forming temperature (MFFT) of a paint or coating and is the minimum temperature at which the product, when applied to a substrate, coalesces in the form of a homogeneous and clear film.

### Detailed description of the invention

An object of the present invention is represented by an aqueous paint composition comprising:
a) an acrylic polymer in aqueous emulsion anionically stabilized at basic pH with a volatile base, and containing self-crosslinking functionalities;
b) an epoxy-polyamine adduct having a FT-IR spectrum with a characteristic peak at about 829 cm⁻¹, and
c) a high boiling glycol-ether selected from the group consisting of Diethylene glycol mono butyl ether (DB), Dipropylene glycol n-butyl ether (DPnB), Propylene glycol phenyl ether (PPh), and Tripropylene glycol mono methyl ether (TPM), preferably DB and DPnB.

Preferably, the acrylic polymer has a Minimum Film Forming Temperature (MFFT) comprised between 0 and 40°C, preferably between 10 and 20°C.

Preferably, the acrylic polymer is anionically stabilized at a basic pH of between 8 and 11.

Preferably, the acrylic polymer is in the form of an anionic colloid.

Preferably, the volatile base which may be used in the present invention is selected from ammonia, morpholine, 2-methylaminoethanol, 2-dimethylaminoethanol, N-methylmorpholine and ethylenediamine. More preferably ammonia.

The self-crosslinking functionalities are obtained by introducing monomers into the chain, or external reactants, having a reactivity attributable to Michael's synthesis (diketo with amine or diketo with hydrazide), as shown in the following scheme:

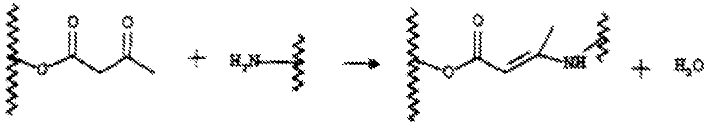

Preferably, the most widely used reactive system for the functionalization of acrylic polymers is the DAAM-ADH system (Diacetone acrylamide, DAAM, and Adipic acid dihydrazide, ADH).

The diketone functionalities of the acrylic polymer (for example DAAM) react with an amine or a hydrazide that is externally added to the polymer (for example ADH).

In a preferred embodiment, the acrylic polymer containing self-crosslinking functionalities further comprises a polyamine polymer, which functions as a coagulant. The nature of said polyamine polymer is different from that of the epoxy-polyamine adduct; preferably the polyamine polymer is polymerized from a mixture of monomers comprising at least one acid monomer and at least one amino monomer.

Acid monomers suitable for preparing the polyamine polymer are acrylic acid, methacrylic acid, and mixtures thereof.

Some of the amino monomers suitable for preparing the polyamine polymer include alkylaminoalkyl esters or amides of unsaturated acids, such as acrylic acid or methacrylic acid.

The polyamine polymer may be mixed with the acrylic polymer, or the two polymers may be crosslinked to each other.

Examples of polyamine polymers which can be used in the present invention and are commercially available, are described in European Patent Applications EP0409459, EP0811663 and EP0832949.

Without wishing to be bound by any interpretive theory, the inventors believe that the loss of ammonia, due to evaporation upon contact with air, triggers the reactivity of the coagulating polymer which, by protonating itself, reacts with the stabilizing anionic charges of the colloid surface, neutralizing them. The coagulating polymer causes the rapid loss of sensitivity to water during the first drying phase (early rain resistance).

Preferred examples of acrylic polymers which can be used in the present invention and are commercially available, are the following products:

| **Polymer** | | **Trade Name** | **Polymer Type** | **MFFT °C** | **Manufacturer** |
|---|---|---|---|---|---|
| E | 5 | Setaqua Expressline 88 | acrylic | 15 | ALLNEX |
| E | 9 | Encor DT 211 | acrylic | 17 | ARKEMA |
| E | 17 | Fastrack 2706 | acrylic | 13 | DOW CHEMICAL |
| E | 24 | NeoCryl A-515 | acrylic | 38 | DSM |
| E | 25 | EPS 717 | acrylic | 17 | EPS |
| E | 26 | Domemul AA 7601 | acrylic | 30 | HELIOS |
| E | 27 | Indofil E822 | acrylic | 15 | INDOFIL IND |
| E | 28 | Mowinil 1760 | styrene/acrylic | 22 | NIPPON GOASEI |
| E | 29 | Pliodisp 6660 | acrylic | 10 | OMNOVA |
| E | 30 | RayCryl 849 | acrylic | 13 | SPECIALTY POLYMERS |
| | | | | | INC |
| E | 31 | Prox AM 157 | acrylic | 13 | SYNTRON |
| E | 32 | Viawan RD 57 | acrylic | 18 | WANA QUIMICA |
| E | 33 | Wancryl | acrylic | 16 | WANA QUIMICA |
| E | 34 | ER 350 | acrylic | 19 | PIDILITE LTD - NYMCO |
| E | 35 | RMPT 515 | acrylic | 35 | PIDILITE LTD - NYMCO |

The preferred acrylic polymers are E5, E17, E25, E30, E31, E34 and E35.

For the purposes of the present invention, epoxy-polyamine adducts having a structure that can be schematized as follows may be used:

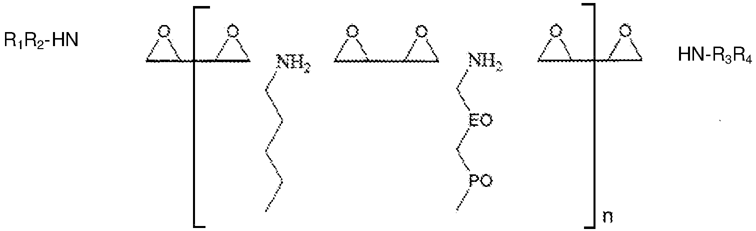

In particular:

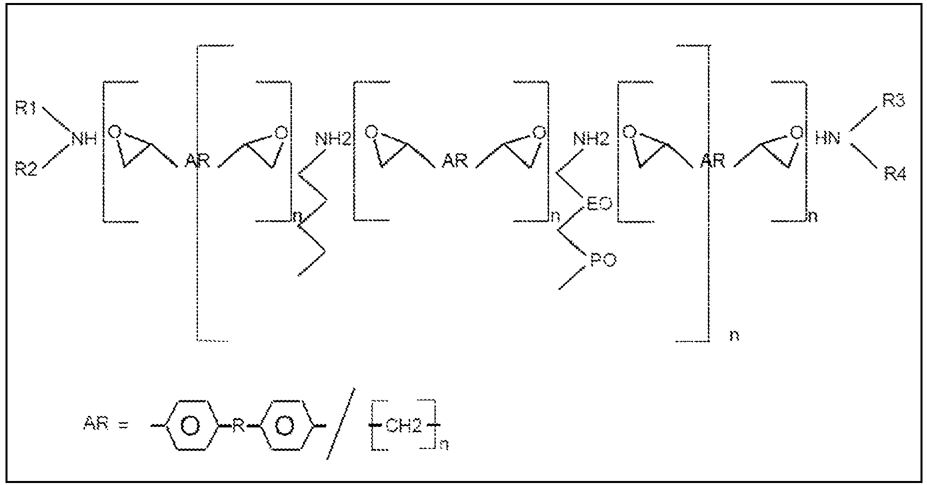

wherein n is comprised between 1 and 15; R₁, R₂, R₃ and R₄, which are the same or different, are independently selected from H, alkyl, amino or amide radicals.

AR consists of a prevalence of diphenyl aromatic radical, wherein R consists of =C(-CH₃)₂ (Bisphenol A) or -CH₂-(Bisphenol F), combined with a minority percentage of linear or branched alkyl radicals.

In the structure in question, the H of the HNR₁R₂ and the HNR₃R₄ radical, that will react with the adjacent oxirane radical to generate "the adduct", R₁R₂N-adduct-NR₃R₄, is represented.

In particular:

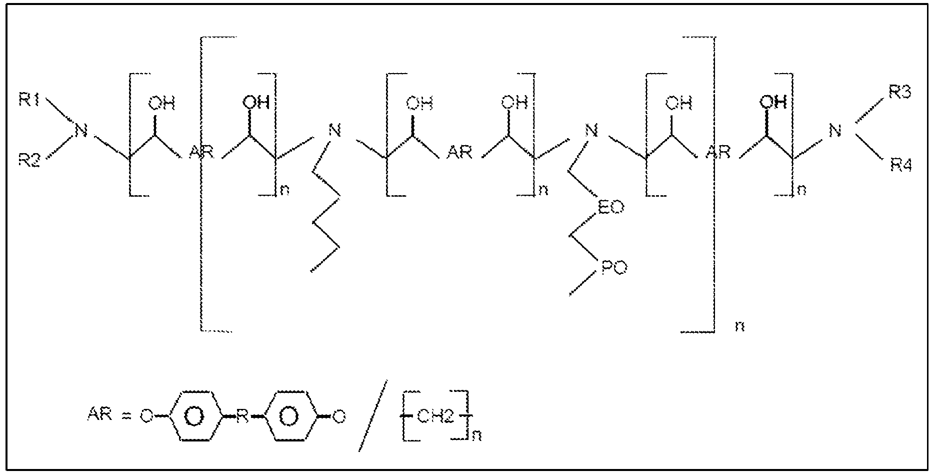

The epoxy-polyamine adduct may be prepared from:
a) at least one bis-epoxy compound, preferably a diglycidyl ether of Bisphenol A and F;
b) at least one alkylamine with a linear or branched C₁-C₆ aliphatic chain;
c) at least one polyetheramine based on oxypropylene (PO), oxyethylene (EO), or a combination thereof;
d) at least one amino- or amide-amino chain terminator.

Typical examples of bis-epoxy compounds are the diglycidyl ethers of Bisphenol A and F, such as the resins: Ankarez^{®}, Araldite^{®}, Bekopox^{®}, Epikote^{®}, Epilox^{®}, Eponac^{®}, Eposir^{®}, Epotec^{®}, Epon^{®}.

Some examples of polyethoxylated or polypropoxylated amines (e.g. Jeffamine^{®}) that may be used are:
Polyoxyethylene monoamine (di- or polyamine) 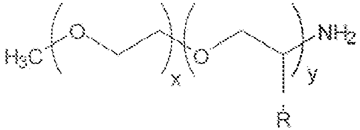
Polyoxypropylene diamine (or polyamine) 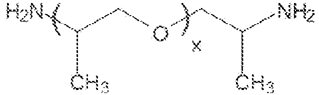
Polyoxyethylene/propylene diamine (or polyamine)

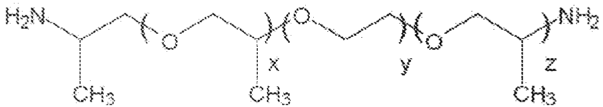

The epoxy-polyamine adduct has an FT-IR spectrum with a characteristic peak at about 829 cm⁻¹. Said peak is due to the presence of para-substituted phenyl radicals, typical of Bisphenol A or F.

The epoxy-polyamine adducts are described in the following literature references:
1) Binder systems for waterborne two-pack products for car refinishes application. Progress in Organic Coatings 48 (2003) 153-160.
2) EP 1 280 842 B1;
3) OD / Coatings Manual 2011, Appendix "C". Pag. 5: Curing Agent for Epoxies; "Polyamine adducts".

Preferred examples of epoxy-polyamine adducts which can be used in the present invention and are commercially available, are the following products:

| **Polymer** | | **Trade Name** | **Polymer Type** | **Manufacturer** |
|---|---|---|---|---|
| PA | 30 | EPIKURE 8545-W-52 | epoxy-amine adduct | HEXION |
| PA | 31 | EPIKURE 8546-W-55 | epoxy-amine adduct | HEXION |
| PA | 32 | MERGINAMID A 154 | polyaminoamide adduct | HOBUM |
| PA | 35 | MERGINAMID A 210/5 | epoxy-amine adduct | HOBUM |
| PA | 40 | Amirez 148/024 | epoxy-amine adduct | INCOREZ |
| PA | 41 | Amirez 148/055 | epoxy-amine adduct | INCOREZ |
| PA | 42 | Epilox H 12-01 | epoxy-amine adduct | LEUNA HARZE |
| PA | 44 | MEEDamine^{®} 2362 W | polyaminoamide adduct | MEEDER |
| PA | 46 | MEEDamine^{®} 2801 W | epoxy-amine adduct | MEEDER |

The preferred epoxy-polyamine adducts are PA30, PA31, PA32, PA35, PA40, PA42, PA44 and PA46. PA30, PA35, PA40 and PA46 are the ones which gave optimal results.

In the composition according to the invention, the epoxy-polyamine adduct as the function of adhesion promoter.

For the purposes of the present invention, the following high boiling glycol-ethers are : Diethylene glycol mono butyl ether (DB), Dipropylene glycol n-butyl ether (DPnB), Propylene glycol phenyl ether (PPh), Tripropylene glycol mono methyl ether (TPM).

Preferred examples of high boiling glycol-ethers which can be used in the present invention and are commercially available, are DB and DPnB.

In the composition according to the invention, the high boiling glycol-ether functions as a coalescer.

Advantageously, the addition of the coalescer has the function to help polymer filming in colloidal form and adequately regulate the drying time of the applied coating.

Coagulation produces the precipitation of the polymer and its separation from the aqueous medium which, at this point, remains free to volatilize. The coagulated polymer reaches faster the necessary inter-colloidal distance (between particles) for the coalescence process to take place.

The direct consequence of this acceleration is a more rapid loss of sensitivity to water (resistance to washout). Complete curing and the final performance of the film remain dependent on the polymer intrinsic reactivity expressed during the crosslinking process.

The aqueous paint composition according to the invention may include one or more ingredients selected from pigments, fillers, antibacterial agents, and other specific additives.

Pigments are essential for the required final coating color. The pigment may be selected both on the basis of its characteristics for formulation use, and its behavioral/performance characteristics once inside the final coating. For the formulation/production aspect, a micronized pigment, dispersible in the aqueous medium without the need of considerable shear effort, is preferable. As for the final performance, a base material with excellent colorimetric yield and retention of the same during exposure to external agents will be preferable. Examples of pigments that can be used in the present invention are titanium dioxide, Yellow 65 Mono-azo CAS 652-34-3; Arylide Yellow 74 CAS 6358-31-2; Anthanthrone Red 168 CAS 4378-61-4; Phthalocyanine Green 7 CAS 1328-53-6; Phthalocyanine Blue 15 CAS 147-14-8.

Fillers (extenders) of various kinds are selected to optimize rheology, physical performance of the coating, and possibly to contain the costs determined by the pigmentation. The preferable extenders for rheology adjustment are micronized minerals with low oil absorption. The specific weight and particle size will affect the sedimentation of the product in tin and the resistance to abrasion. Other extenders that can positively influence the coating duration are micronized silicates that partially take part in the polymer film formation. Examples of extenders that may be used in the present invention are carbonates (CaCO₃), barium sulfate, and silicates such as: kaolin, mica, talc, and silicas.

The aqueous paint composition according to the invention may include further specific additives, aimed at optimizing the paint product in the production process phase as well as its behavior during the application and drying phases. Examples of specific additives are dispersant additives, antifoam additives, anionic and non-ionic surfactants, and rheological additives.

Dispersant additives, such as polyacrylates, in the fillers and pigments dispersion phase.

Surfactants of various kinds to adjust the system surface tension, helping the dispersant in "wetting" the charges during dispersion and improving product applicability on the surface to be coated (surface wetting).

Antifoam additives that may be used in all those steps of the production process that can create foam stabilization.

Antibacterial agents are additives that are designed to prevent the development of bacterial contamination (mold, etc.). The choice of the appropriate additive is preferably made based on the nature of the binder and tested in the stability tests of the product in tin over time.

Examples of antibacterial agents that are commercially available are 1-(3-chloroallyl)-3,5,7-triaza-1-azoniaadamantane chloride combined with a stabilizer (sodium bicarbonate), "DOWICIL 75" from DOW Chemical, or the 1,2-benzisothiazolin-3-one in a 20% aqueous solution of dipropylene glycol, "Proxel GXL" from Lonza.

In a preferred embodiment, the volume ratio between organic binder and pigments/extenders, called Pigment Volume Concentration (PVC), is comprised between 50 and 70.

This ratio has a decisive influence on the application behavior of the paint product and consequently on the performance of the coating obtained.

In a further preferred embodiment, the ratio between acrylic polymer and epoxy-amino adduct ranges from a minimum of 96/4 parts by weight (pbw) to a maximum of 86/14 parts by weight (pbw), preferably 90/10 pbw, based on the total dry residue.

Preferably, the amount of high boiling glycol-ether, calculated on the total of the polymer in the formula (*i.e.* acrylic polymer and epoxy-amino adduct) ranges from a minimum of 10 parts by weight (pbw) to a maximum of 40 parts by weight (pbw), preferably 25 pbw, out of 100 parts by weight.

The inventors have surprisingly identified a combination of substances that accelerate the first coagulation phase and at the same time catalyze the crosslinking process, without the coalescence phase being minimally compromised.

A further object of the present invention is represented by the use of the aqueous paint composition according to the invention for horizontal road markings.

A further object of the present invention is represented by the coating film obtained by applying an aqueous paint composition according to the invention to a road surface, followed by evaporation of the aqueous medium.

An accelerated filming-crosslinking is generated in the film which rapidly brings the coating to a physical condition of complete resistance to foot traffic.

The resulting film also shows mechanical resistance performances above the standard.

A further object of the present invention is represented by a method for reducing the curing time of a road marking on a road surface comprising:
i. applying an aqueous paint composition according to the invention to said road surface a layer; and
ii. evaporating the aqueous medium from said layer to form wear-resistant horizontal road markings on said road surface.

The following examples have the aim to further illustrate the invention without however limiting it.

### EXAMPLES

### Materials

**TABLE 1 - Composition of the paint product according to the invention**

| Type | % |
|---|---|
| E (50% dr acrylic emulsion) | 217.90 |
| Ammonia | 3.70 |
| Polymer dispersant | 5.70 |
| Non-ionic surfactant | 2.00 |
| Antifoam additive | 5.10 |
| Titanium dioxide | 50.00 |
| Calcium carbonate | 535.50 |
| Deionized water | 115.60 |
| Ethanol | 20.20 |
| Dipropylene glycol n-butyl ether (DPnB) | 33.40 |
| Antibacterial additive | 0.10 |
| PA (100% rs epoxy-polyamine adduct) | 10.80 |
| Total | 1000.00 |

| | |
|---|---|
| % dr = % dry residue | |

### Methods

### Standard test for measuring the drying rate of the applied paint film (ASTM D711 - 89 (1998), Standard Test Method for No-Pick-Up Time of Traffic Paint)

A calibrated weight, cylindrical in shape with two rubber rings placed on the circumference at a precise distance, is allowed to roll through a guide (slide) on a panel coated with the paint product to be tested.

The time (minutes) necessary for the film not to leave imprint on the rubber rings surrounding the cylinder is measured.

### Standard Test for Abrasion Resistance of Organic Coatings (ASTM D4060 - 10, Standard Test Method for Abrasion Resistance of Organic Coatings by the Taber Abraser)

The paint product is applied on special panels which, after having undergone the complete drying process, are placed on a machine that perform a controlled abrasion with a CS17 abrasive wheel (3000 rpm).

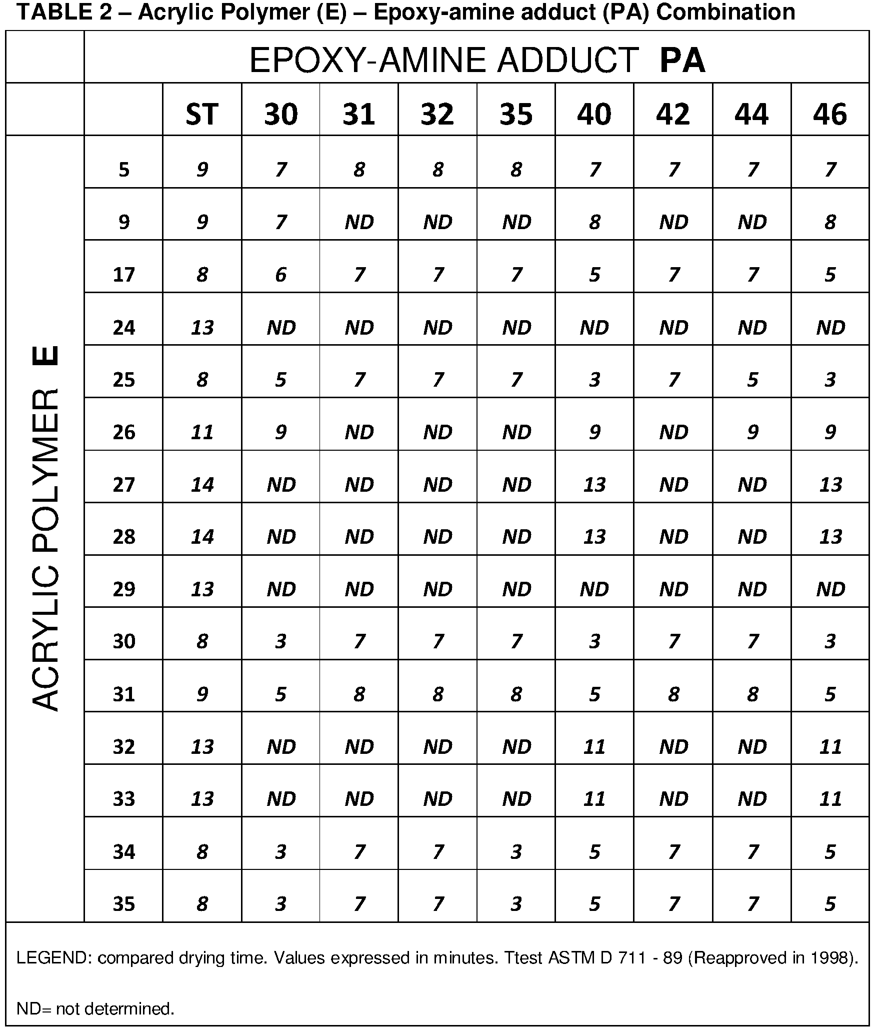

**TABLE 3 - High-boiling glycol-ethers: comparison of induced reactivity:**

| formulation of a clear paint (without pigments) | | | | | | | | | |
|---|---|---|---|---|---|---|---|---|---|
| **Comparison of high-boiling glycol-ethers** | | | | | | | | | |
| | **DB** | **PM** | **PnP** | **DPnB** | **PPh** | **TPnB** | **TPM** | **EB** | **DPM** |
| **50% dr Acrylic Emulsion** | 658.96 | 658.96 | 658.96 | 658.96 | 658.96 | 658.96 | 658.96 | 658.96 | 658.96 |
| **Ammonia** | 25.11 | 25.11 | 25.11 | 25.11 | 25.11 | 25.11 | 25.11 | 25.11 | 25.11 |
| **Ethoxylated secondary alcohol** | 1.64 | 1.64 | 1.64 | 1.64 | 1.64 | 1.64 | 1.64 | 1.64 | 1.64 |
| **Water** | 21.47 | 21.47 | 21.47 | 21.47 | 21.47 | 21.47 | 21.47 | 21.47 | 21.47 |
| **Ethanol** | 57.05 | 57.05 | 57.05 | 57.05 | 57.05 | 57.05 | 57.05 | 57.05 | 57.05 |
| **Diethylene glycol mono-butyl ether (DB)** | 90.08 | | | | | | | | |
| **Propylene glycol mono-methyl ether (PM)** | | 90.08 | | | | | | | |
| **N Propyl glycol propyl ether (PnP)** | | | 90.08 | | | | | | |
| **Dipropylene glycol n-butyl ether (DPnB)** | | | | 90.08 | | | | | |
| **Propylene glycol phenyl ether (PPh)** | | | | | 90.08 | | | | |
| **Tripropylene glycol n-butyl ether (TPnB)** | | | | | | 90.08 | | | |
| **Tripropylene glycol mono-methyl ether (TPM)** | | | | | | | 90.08 | | |
| **Ethylene glycol monobutyl ether (EB)** | | | | | | | | 90.08 | |
| **Dipropylene glycol monomethyl ether (DPM)** | | | | | | | | | 90.08 |
| **Proxel GXL** | 0.09 | 0.09 | 0.09 | 0.09 | 0.09 | 0.09 | 0.09 | 0.09 | 0.09 |
| **20% epoxy-amine adduct** | 145.59 | 145.59 | 145.59 | 145.59 | 145.59 | 145.59 | 145.59 | 145.59 | 145.59 |
| | | | | | | | | | |
| **Total** | **1000.0 0** | **1000.0 0** | **1000.0 0** | **1000.0 0** | **1000.0 0** | **1000.0 0** | **1000.0 0** | **1000.0 0** | **1000.0 0** |
| | **XXX** | | | **XX** | **X** | **X** | **XX** | | **X** |
| excelle good fair poor nt **XXX XX X** | | | | | | | | | |

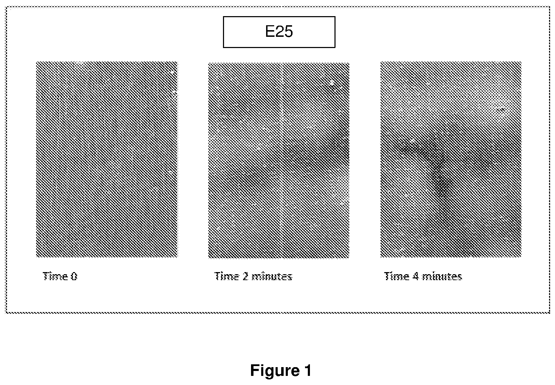

**Figure 1** shows a reference clear paint with no added nitrogen polymer. The whitish halos of "T 2 minutes" and "T 4 minutes" are given by the imprint on the surface of the film which, having not yet entered the reactive film-forming phase, is recovered by the stretching of the same film which is still fluid.

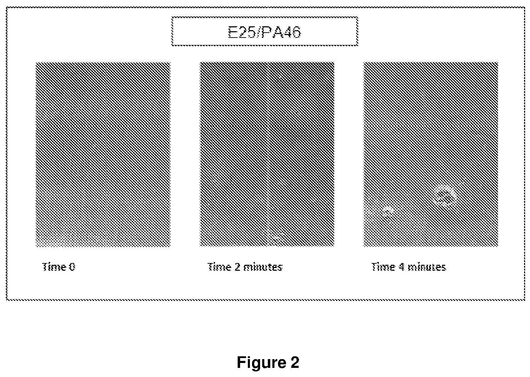

**Figure 2** shows a reference clear paint with added nitrogen polymer, but with no added high boiling glycol-ether. Also in this image, the film shows no tangible signs of structural change after the imprinting at 2 and 4 minutes on the applied film. Reactivity, within this time limit, has not yet manifested itself.

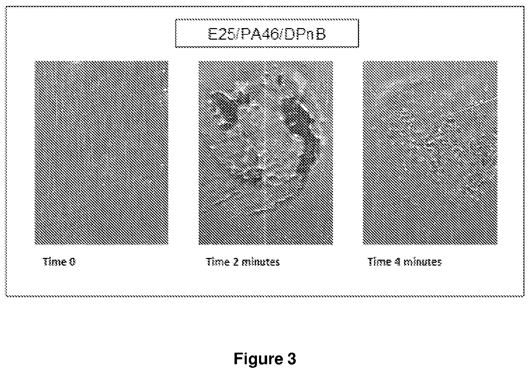

**Figure 3** shows a clear paint with the addition of a nitrogen polymer and a high-boiling glycol-ether according to the invention.

The imprinting on the film after two minutes markedly shows the loss of mobility (fluidity) due to the reactive process that has already begun. After 4 minutes, the film shows a structure that is already solid enough to moderately resist the pressure of the imprinting.

**TABLE 4- Compared formulations (E25/PA46 combination ratios, overlapping to E25/PA40, E30/PA30, E30/PA40, E30/PA46, E34/PA30, E34/PA35, E35/PA30, or E35/PA35 combinations)**

| **COMPARED FORMULATION** | **E25** | **E25/PA46 96/4** | **E25/PA46 96/6** | **E25/PA46 96/8** | **E25/PA46 90/10** | **E25/PA46 88/12** | **E25/PA46 86/14** |
|---|---|---|---|---|---|---|---|
| **50% dr Acrylic Emulsion** | 217.90 | 217.90 | 217.90 | 217.90 | 217.90 | 217.90 | 217.90 |
| Ammonia | 3.70 | 3.70 | 3.70 | 3.70 | 3.70 | 3.70 | 3.70 |
| Polymeric dispersant | 5.70 | 5.70 | 5.70 | 5.70 | 5.70 | 5.70 | 5.70 |
| Ethoxylated secondary alcohol | 2.00 | 2.00 | 2.00 | 2.00 | 2.00 | 2.00 | 2.00 |
| Silicone antifoam | 5.10 | 5.10 | 5.10 | 5.10 | 5.10 | 5.10 | 5.10 |
| Titanium dioxide | 50.00 | 50.00 | 50.00 | 50.00 | 50.00 | 50.00 | 50.00 |
| Micronized calcium carbonate | 214.20 | 214.20 | 214.20 | 214.20 | 214.20 | 214.20 | 214.20 |
| Calcium carbonate | 321.30 | 321.30 | 321.30 | 321.30 | 321.30 | 321.30 | 321.30 |
| Water | 110.60 | 110.60 | 110.60 | 110.60 | 110.60 | 110.60 | 110.60 |
| Ethanol | 20.20 | 20.20 | 20.20 | 20.20 | 20.20 | 20.20 | 20.20 |
| Coalescer | 38.40 | 38.40 | 38.40 | 38.40 | 38.40 | 38.40 | 38.40 |
| Antibacterial additive | 0.10 | 0.10 | 0.10 | 0.10 | 0.10 | 0.10 | 0.10 |
| **100% dr Epoxy-amine adduct** | - | 4.35 | 6.53 | 8.70 | 10.88 | 12.43 | 15.23 |
| **Total** | 989.20 | 993.55 | 995.73 | 997.90 | 1000.08 | 1001.63 | 1004.43 |

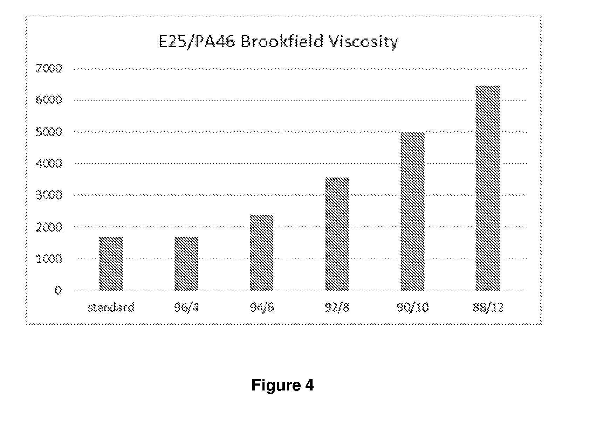

**Figure 4** shows that the percentage of polyamine epoxy adduct (PA46 or PA30, PA35, PA40) present in the mixture generates a proportional increase in the Brookfield cPs viscosity (mPa.s) of the preparation.

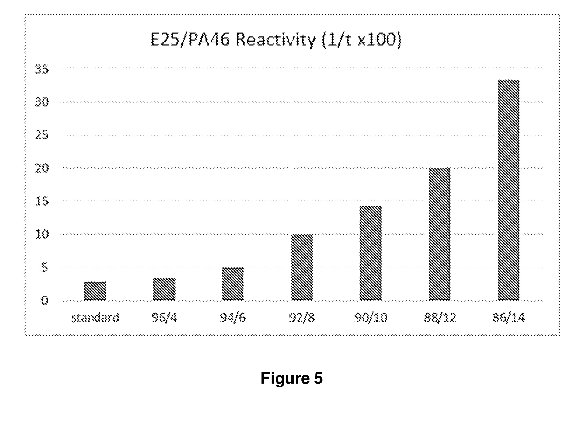

**Figure 5** shows the reactivity 1/minutes x 100 of the formulations being compared (Combination ratios E25/PA46. Overlapping results obtained also with: E25/PA40, E30/PA30, E30/PA40, E30/PA46, E34/PA30, E34/PA35, E35/PA30, or E35/PA35). Reactivity of the system is already visible at the minimum dosage of 96/4.

It increases by about 100% at a dosage of between 94/6 and 92/8 and it stabilizes at increments of about 30% with each subsequent dosage. The dosage of 86/14 is the most reactive and comes before the system manageability limit.

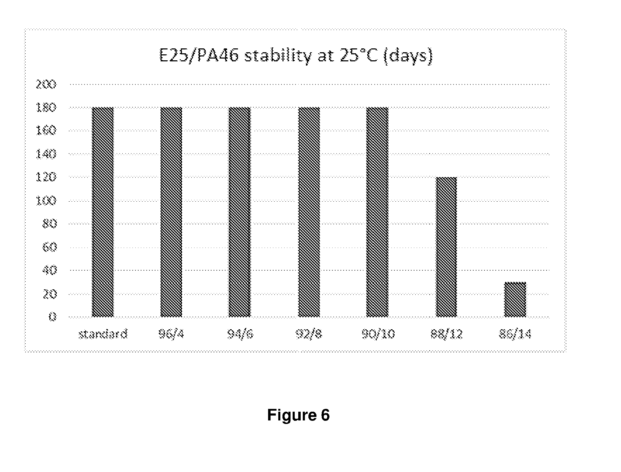

**Figure 6** shows the stability in days at 25°C (1/viscosity) of the formulations being compared (Combination ratios E25/PA46. Overlapping results obtained also with: E25/PA40, E30/PA30, E30/PA40, E30/PA46, E34/PA30, E34/PA35, E35/PA30, or E35/PA35).

The storage stability of the various dosages makes it possible to consider mixtures with ratios between 96/4 and 90/10 as single-component products stable to long term storage. 88/12 and, in particular, 86/14 ratios are to be considered as products with reduced stability and therefore commercially offered either as short term storage products or two-component systems.

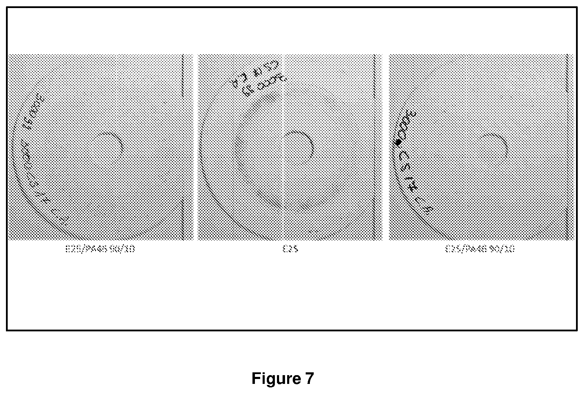

**Figure 7** shows a comparison of abrasion resistance. The ASTM D4060 standard abrasion resistance test highlights the higher performance of the coating produced with the 90/10 combination (left and right) compared to the coating originating from the standard without additives (center).

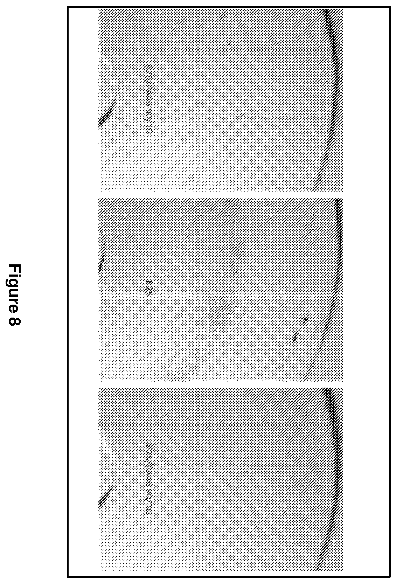

**Figure 8** shows an enlarged detail of what is seen in the previous image of Figure 7.

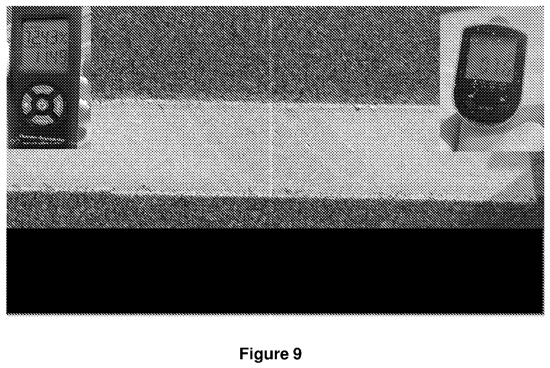

**Figure 9** shows the application of the paint product according to the invention on road.

In this image, tit is noted the faint marking of a vehicle tire overrun on a road marking strip applied with the product E25/PA46 90/10 (Overlapping results obtained also with: E25/PA40, E30/PA30, E30/PA40, E30/PA46, E34/PA30, E34/PA35, E35/PA30, or E35/PA35 in the same ratios) 8 minutes before on a road with the surface at 7.6°C, an ambient temperature of 11.49°C and a humidity of 72.43%.

Surprisingly, the inventors have therefore found that the aqueous paint composition of the present invention has considerable advantages:
1) The sample according to the invention showed a decidedly accelerated behavior during drying.
2) Once applied, the film enters the coagulation phase faster than the standard (without additives), reaching touch-free and a consistency such as to express a minimum condition of resistance to trampling in a short time, while the early rain resistance undergoes a rapid acceleration in the direction of complete insensitivity to water.

### FT-IR spectroscopy to identify the aromatic component resulting from the presence of Bisphenol A or F in the epoxy-polyamine adduct

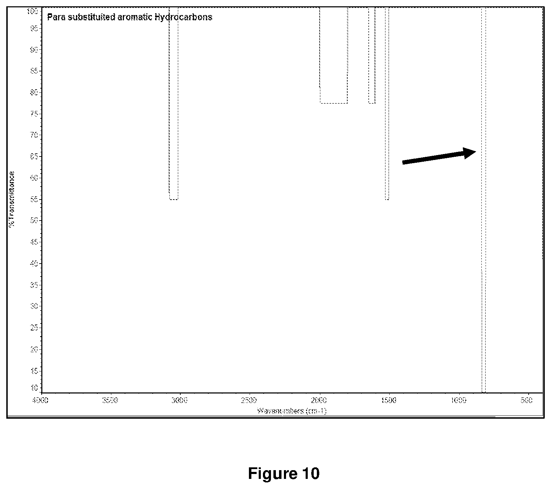

**Figure 10** shows the specific absorption band at about 829 cm⁻¹ of the aromatic ring (phenyl) substituted in the para-para position. The presence or absence of this infrared absorption band is fundamental for the qualitative/quantitative identification of the epoxy-polyamine adduct.

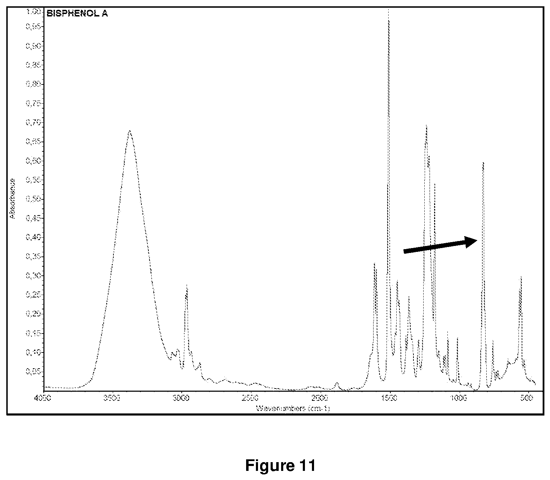

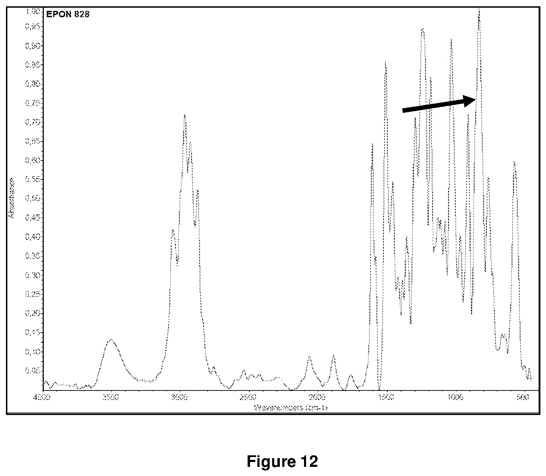

The absorption band around 830 cm⁻¹ is decisive for the identification of the presence of para-substituted phenyl radicals, typical of Bisphenol A or F **(****Figure 11****).** **Figure 12** confirms the presence of the characteristic peak at about 829 cm⁻¹ in the bisphenol A diglycidyl ether (Epon^{®} 828) of formula: 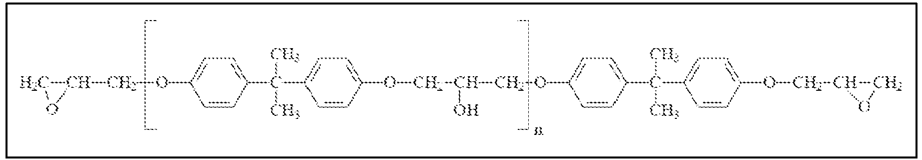 wherein n = 0.

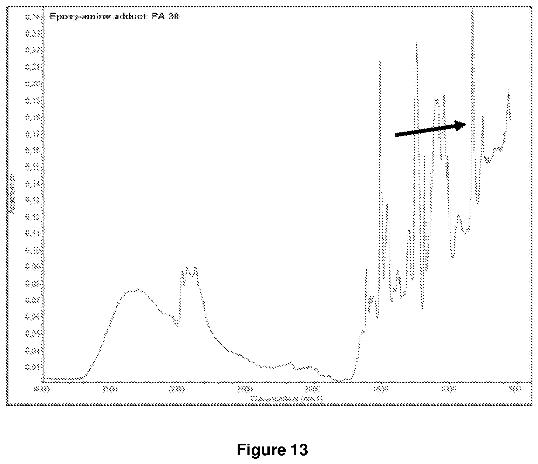

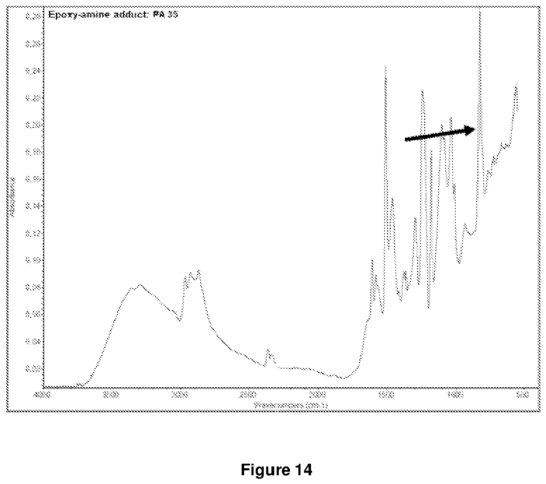

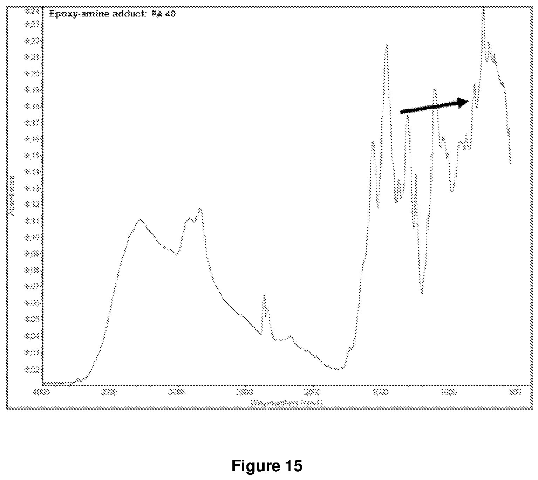

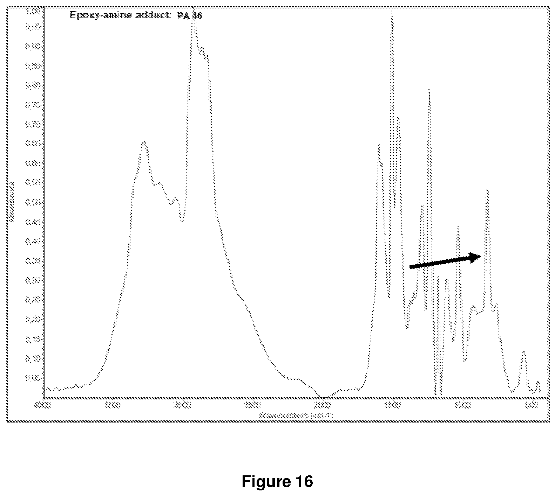

**Figures 13-16** show FT-IR spectra (absorbance) of epoxy-polyamine PA30, PA35, PA40 and PA46 characterized by having a peak at about 829 cm⁻¹.

## Claims

1. An aqueous paint composition comprising:
a) an acrylic polymer aqueous emulsion anionically stabilized at basic pH with a volatile base, and containing self-crosslinking functionalities;
b) an epoxy-polyamine adduct having a FT-IR spectrum with a characteristic peak at about 829 cm⁻¹;
c) a high boiling glycol-ether selected from the group consisting of Diethylene glycol mono butyl ether (DB), Dipropylene glycol n-butyl ether (DPnB), Propylene glycol phenyl ether (PPh), and Tripropylene glycol mono methyl ether (TPM), preferably DB and DPnB.

2. The composition according to claim 1, **characterized in that** said acrylic polymer has a minimum film forming temperature comprised between 0 and 40°C, preferably between 10 and 20°C.

3. The composition according to claim 1 or 2, **characterized in that** said basic pH is comprised between 8 and 11.

4. The composition according to any one of claims 1 to 3, **characterized in that** said volatile base is selected from ammonia, morpholine, 2-methylaminoethanol, 2-dimethylaminoethanol, N-methylmorpholine and ethylenediamine, more preferably ammonia.

5. The composition according to any one of claims 1 to 4, **characterized in that** said self-crosslinking functionalities contain diketone groups reacting with an amine or a hydrazide external to the polymer.

6. The composition according to any one of claims 1 to 5, **characterized in that** said acrylic polymer further comprises a polyamine polymer.

7. The composition according to any one of claims 1 to 6, **characterized in that** said epoxy-polyamine adduct is prepared from:
a) at least one bis-epoxy compound, preferably a diglycidyl ether of Bisphenol A and F;
b) at least one alkylamine with a linear or branched C₁-C₆ aliphatic chain;
c) at least one polyetheramine based on oxypropylene (PO), oxyethylene (EO), or a combination thereof;
d) at least one amino- or amide-amino chain terminator.

8. The composition according to any one of claims 1 to 7, **characterized in that** it further comprises one or more ingredients selected from the group comprising pigments, fillers, antibacterial agents, dispersing additives, antifoam additives, anionic and non-ionic surfactants, and rheological additives.

9. The composition according to claim 8, **characterized in that** it has a PVC ratio between organic binder and pigments/fillers comprised between 50 and 70.

10. The composition according to any one of claims 1 to 9, **characterized in that** it has a total dry residue ratio between the acrylic polymer and the epoxy-amino adduct comprised between 96/4 parts by weight and 86/14 parts by weight, preferably of 90/10 parts by weight.

11. The composition according to any one of claims 1 to 10, **characterized in that** it has an amount of high boiling glycol-ether comprised between 10 and 40 parts by weight out of 100 parts by weight, preferably of 25 parts by weight out of 100 parts by weight, with respect to the total of the polymer comprising the acrylic polymer and the epoxy-amine adduct.

12. Use of an aqueous paint composition according to any one of the preceding claims for horizontal road marking.

13. Coating film obtained by applying an aqueous paint composition according to any one of claims 1-11 to a road surface, followed by evaporation of the aqueous medium.

14. A method of reducing the curing time of a horizontal road marking on a road surface including:
i. applying a layer of an aqueous paint composition according to any one of claims 1 to 11 to said road surface; and
ii. evaporating the aqueous medium from said layer to form said wear resistant horizontal road marking on said road surface.

## Patentansprüche

1. Wässrige Farbzusammensetzung, umfassend:
a) eine wässrige Acrylpolymeremulsion, die bei basischem pH-Wert mit einer flüchtigen Base anionisch stabilisiert ist und selbstvernetzende Funktionalitäten enthält;
b) ein Epoxid-Polyamin-Addukt, das ein FT-IR-Spektrum mit einem charakteristischen Peak bei etwa 829 cm⁻¹ aufweist;
c) einen hochsiedenden Glykolether, der ausgewählt aus der Gruppe bestehend aus Diethylenglykolmonobutylether (DB), Dipropylenglykol-n-butylether (DPnB), Propylenglykolphenylether (PPh) und Tripropylenglykolmonomethylether (TPM), vorzugsweise DB und DPnB.

2. Zusammensetzung nach Anspruch 1, **dadurch gekennzeichnet, dass** das Acrylpolymer eine Mindestfilmbildungstemperatur aufweist, die zwischen 0 und 40 °C, vorzugsweise zwischen 10 und 20 °C liegt.

3. Zusammensetzung nach Anspruch 1 oder 2, **dadurch gekennzeichnet, dass** der basische pH-Wert zwischen 8 und 11 liegt.

4. Zusammensetzung nach einem der Ansprüche 1 bis 3, **dadurch gekennzeichnet, dass** die flüchtige Base ausgewählt ist aus Ammoniak, Morpholin, 2-Methylaminoethanol, 2-Dimethylaminoethanol, N-Methylmorpholin und Ethylendiamin, vorzugsweise Ammoniak.

5. Zusammensetzung nach einem der Ansprüche 1 bis 4, **dadurch gekennzeichnet, dass** die selbstvernetzenden Funktionalitäten Diketongruppen enthalten, die mit einem Amin oder einem Hydrazid außerhalb des Polymers reagieren.

6. Zusammensetzung nach einem der Ansprüche 1 bis 5, **dadurch gekennzeichnet, dass** das Acrylpolymer ferner ein Polyaminpolymer umfasst.

7. Zusammensetzung nach einem der Ansprüche 1 bis 6, **dadurch gekennzeichnet, dass** das Epoxid-Polyamin-Addukt hergestellt ist aus:
a) mindestens einer Bis-Epoxid-Verbindung, vorzugsweise einem Diglycidylether von Bisphenol A und F;
b) mindestens einem Alkylamin mit einer linearen oder verzweigten aliphatischen C₁-C₆-Kette;
c) mindestens einem Polyetheramin auf Basis von Oxypropylen (PO), Oxyethylen (EO) oder einer Kombination davon;
d) mindestens einem Amino- oder Amid-Amino-Kettenabbruchmittel.

8. Zusammensetzung nach einem der Ansprüche 1 bis 7, **dadurch gekennzeichnet, dass** sie ferner einen oder mehrere Inhaltsstoffe umfasst, die aus der Gruppe ausgewählt sind, die Pigmente, Füllstoffe, antibakterielle Mittel, Dispergieradditive, Antischaumadditive, anionische und nichtionische Tenside und rheologische Additive umfasst.

9. Zusammensetzung nach Anspruch 8, **dadurch gekennzeichnet, dass** sie ein PVC-Verhältnis zwischen organischem Bindemittel und Pigmenten/Füllstoffen aufweist, das zwischen 50 und 70 liegt.

10. Zusammensetzung nach einem der Ansprüche 1 bis 9, **dadurch gekennzeichnet, dass** sie ein Gesamttrockenrückstandsverhältnis zwischen dem Acrylpolymer und dem Epoxid-Amino-Addukt aufweist, das zwischen 96/4 Gewichtsteilen und 86/14 Gewichtsteilen, vorzugsweise bei 90/10 Gewichtsteilen, liegt.

11. Zusammensetzung nach einem der Ansprüche 1 bis 10, **dadurch gekennzeichnet, dass** sie eine Menge an hochsiedendem Glykolether aufweist, die zwischen 10 und 40 Gewichtsteilen von 100 Gewichtsteilen, vorzugsweise bei 25 Gewichtsteilen von 100 Gewichtsteilen, bezogen auf die Gesamtmenge des Polymers, das das Acrylpolymer und das Epoxid-Amin-Addukt umfasst, liegt.

12. Verwendung einer wässrigen Farbzusammensetzung nach einem der vorstehenden Ansprüche zur horizontalen Straßenmarkierung.

13. Beschichtungsfilm, der durch Aufbringen einer wässrigen Farbzusammensetzung nach einem der Ansprüche 1-11 auf eine Straßenoberfläche und anschließendes Verdampfen des wässrigen Mediums erhalten wird.

14. Verfahren zum Reduzieren der Aushärtungszeit einer horizontalen Straßenmarkierung auf einer Straßenoberfläche, einschließlich:
i. Aufbringen einer Schicht einer wässrigen Farbzusammensetzung nach einem der Ansprüche 1 bis 11 auf die Straßenoberfläche; und
ii. Verdampfen des wässrigen Mediums aus der Schicht, um die abriebfeste, horizontale Straßenmarkierung auf der Straßenoberfläche zu bilden.

## Revendications

1. Composition de peinture aqueuse comprenant :
a) une émulsion aqueuse de polymère acrylique stabilisée anioniquement à un pH basique avec une base volatile, et contenant des groupes fonctionnels autoréticulants ;
b) un produit d'addition époxy-polyamine ayant un spectre IRTF avec un pic caractéristique à environ 829 cm⁻¹ ;
c) un éther de glycol à point d'ébullition élevé choisi parmi le groupe constitué d'éther monobutylique de diéthylène glycol (DB), d'éther n-butylique de dipropylène glycol (DPnB), d'éther phénylique de propylène glycol (PPh) et d'éther monométhylique de tripropylène glycol (TPM), de préférence le DB et le DPnB.

2. Composition selon la revendication 1, **caractérisée en ce que** ledit polymère acrylique a une température minimale de formation de film comprise entre 0 et 40 °C, de préférence entre 10 et 20 °C.

3. Composition selon la revendication 1 ou 2, **caractérisée en ce que** ledit pH basique est compris entre 8 et 11.

4. Composition selon l'une quelconque des revendications 1 à 3, **caractérisée en ce que** ladite base volatile est choisie parmi l'ammoniac, la morpholine, le 2-méthylaminoéthanol, le 2-diméthylaminoéthanol, la N-méthylmorpholine et l'éthylènediamine, plus préférablement l'ammoniac.

5. Composition selon l'une quelconque des revendications 1 à 4, **caractérisée en ce que** lesdits groupes fonctionnels autoréticulants contiennent des groupes dicétones réagissant avec une amine ou un hydrazide externe au polymère.

6. Composition selon l'une quelconque des revendications 1 à 5, **caractérisée en ce que** ledit polymère acrylique comprend en outre un polymère de polyamine.

7. Composition selon l'une quelconque des revendications 1 à 6, **caractérisée en ce que** ledit produit d'addition époxy-polyamine est préparé à partir de :
a) au moins un composé bis-époxy, de préférence un éther diglycidique de bisphénol A et F ;
b) au moins une alkylamine avec une chaîne aliphatique en C₁-C₆ linéaire ou ramifiée ;
c) au moins une polyétheramine à base d'oxypropylène (PO), d'oxyéthylène (EO) ou d'une combinaison de ceux-ci ;
d) au moins un agent de terminaison de chaîne aminé ou amido-aminé.

8. Composition selon l'une quelconque des revendications 1 à 7, **caractérisée en ce qu'**elle comprend en outre un ou plusieurs ingrédients choisis parmi le groupe comprenant des pigments, des charges, des agents antibactériens, des additifs de dispersion, des additifs antimousses, des tensioactifs anioniques et non ioniques, et des additifs rhéologiques.

9. Composition selon la revendication 8, **caractérisée en ce qu'**elle a un rapport PVC entre le liant organique et les pigments/charges compris entre 50 et 70.

10. Composition selon l'une quelconque des revendications 1 à 9, **caractérisée en ce qu'**elle a un rapport total de résidus secs entre le polymère acrylique et le produit d'addition époxy-amine compris entre 96/4 parties en poids et 86/14 parties en poids, de préférence de 90/10 parties en poids.

11. Composition selon l'une quelconque des revendications 1 à 10, **caractérisée en ce qu'**elle a une quantité d'éther de glycol à point d'ébullition élevé comprise entre 10 et 40 parties en poids pour 100 parties en poids, de préférence de 25 parties en poids pour 100 parties en poids, par rapport au total du polymère comprenant le polymère acrylique et le produit d'addition époxy-amine.

12. Utilisation d'une composition de peinture aqueuse selon l'une quelconque des revendications précédentes pour le marquage routier horizontal.

13. Film de revêtement obtenu par l'application d'une composition de peinture aqueuse selon l'une quelconque des revendications 1 à 11 à une surface de route, suivie de l'évaporation du milieu aqueux.

14. Procédé de réduction du temps de séchage d'un marquage routier horizontal sur une surface de route, comportant :
i. l'application d'une couche d'une composition de peinture aqueuse selon l'une quelconque des revendications 1 à 11 sur ladite surface de route ; et
ii. l'évaporation du milieu aqueux de ladite couche pour former ledit marquage routier horizontal résistant à l'usure sur ladite surface de route.
